# EUROPÄISCHE PATENTSCHRIFT

(11) **EP 3 789 808 B1**
(45) Veröffentlichungstag und Bekanntmachung des Hinweises auf die Patenterteilung: **20.12.2023**
(21) Anmeldenummer: 19195561.6
(22) Anmeldetag: 05.09.2019
(51) Int. Cl.: B23Q 1/36, B23Q 1/62, G02B 7/182, G02B 21/34, G02B 7/00

(54) **KOPPLUNGSGLIED FÜR EINE POSITIONIEREINRICHTUNG SOWIE POSITIONIEREINRICHTUNG MIT EINEM KOPPLUNGSGLIED**
COUPLER FOR A POSITIONING DEVICE AND POSITIONING DEVICE WITH A COUPLER
ORGANE DE COUPLAGE POUR UN DISPOSITIF DE POSITIONNEMENT AINSI QUE DISPOSITIF DE POSITIONNEMENT DOTÉ D'UN ORGANE DE COUPLAGE

(43) Veröffentlichungstag der Anmeldung: 10.03.2021
(73) Patentinhaber: ETEL S.A., 2112 Môtiers (CH)
(72) Erfinder: KOBEL, Philipp, 2560 Nidau (CH); MAAMARI, Nadim, Colombier (CH)
(74) Vertreter: Maikowski & Ninnemann Patentanwälte Partnerschaft mbB

(56) Entgegenhaltungen:
- EP-A1- 1 420 179
- US-A1- 2008 216 286

## Beschreibung

Diese Schrift betrifft Ausfiihrungsformen eines Kopplungsglieds für eine Positioniereinrichtung, insbesondere eine Positioniereinrichtung in Portalbauweise (bekannt auch als sog. Gantry-System), z.B. einen XY-Tisch sowie Ausfiihrungsformen einer Positioniereinrichtung mit einem Kopplungsglied.

Bei einer beispielhaften Positioniereinrichtung, insbesondere einer Positioniereinrichtung in Portalbauweise, wie in der EP 2 066 996 B1 beschrieben, ist zwischen zwei (oder mehr) parallelen Linearführungen ein Querbalken beweglich gelagert, auf welchem mittels einer weiteren Linearführung ein Funktionselement beweglich gelagert ist, so dass dieses Funktionselement in einer Ebene zwischen den beiden parallelen Linearführungen (bekannt auch als sog. H-Portal) frei positionierbar ist.

Das Funktionselement kann - je nach Anwendung - beispielsweise ein Greifer eines Bestückungsautomaten, ein Mikroskop, ein Laser eines Laser - Bearbeitungszentrums oder auch ein Tastsystem einer Koordinatenmessmaschine sein. Viele weitere Anwendungen sind bekannt.

In allen diesen Anwendungen, von denen es für Positioniereinrichtungen noch einige mehr gibt, spielt die möglichst genaue Positionierung des Funktionselements eine wichtige Rolle. Daher wird mitunter Aufwand betrieben, um mit Hilfe von möglichst genauen Positionsmessgeräten das Funktionselement möglichst genau zu positionieren, was beispielsweise in der EP 2 066 996 B1 näher ausgeführt ist.

Aber nicht nur eine genaue Positionsmessung kann für eine genaue Positionierung wichtig sein, sondern auch die Ausgestaltung der Kopplung zwischen den senkrecht zueinander liegenden Linearführungen. Aufgrund der Beschleunigungen in die zueinander senkrecht liegenden Richtungen kann es, je nach Steifigkeit der betreffenden Komponenten, zu Verschwenkungen des Funktionselement bzw. der diesen tragenden Linearführung kommen, beispielsweise um die Y-Achse bei einer Beschleunigung (darunter fällt auch ein Bremsvorgang) entlang der X-Achse, aber auch um die vertikale Z-Achse, z.B. bei nicht exakt synchroner Bewegung der den Querbalken tragenden zwei (oder mehr) parallelen Linearführungen in X-Richtung.

Die Zulassung einer begrenzten Verschwenkung des das Funktionselement tragenden Querbalken um die vertikale Z-Achse ist mitunter erwünscht, da unter Umständen ein exakt synchroner Betrieb der den Querbalken tragenden zwei (oder mehr) parallelen Linearführungen nicht zu jedem Zeitpunkt gewährleistet ist, z.B. gerade aufgrund einer angestrebten geringfügigen Verschwenkung des Funktionselements, wie in der EP 2 066 996 B1 in Abs. 0040 ausgeführt ist.

Hingegen sind die übrigen Verschwenkungen üblicherweise unerwünscht, da sie eine genaue Positionierung des Funktionselements erschweren.

EP 1 420 179 A1 beschreibt ein optisches System mit einem Aufhängungssystem mit einem flachen Federelement mit vier Beinen. Die Schenkel sind bezüglich der Mittelstellung des Federelements symmetrisch angeordnet und jeder der Schenkel weist eine Längsachse und einen Endabschnitt auf. Zwei Vorspannelemente sind nahe den Endabschnitten von zwei der Schenkel derart angeordnet, dass sie eine Vorspannkraft auf diese Schenkel aufbringen. Die Vorspannkraft (F) weist im Wesentlichen in Richtung der Längsachse.

US 2008 216 286 A1 ein Blatt-Wagenrad-Biegeelement zum Koppeln eines Objekts an einen Rahmen. Das Biegeelement umfasst ein Blatt-Biegeelement zum Anbringen an einem Objekt und ein Wagenrad-Scharnier zum Anbringen an dem Rahmen. Die Blattbiegung definiert eine Gegenbiegungsachse und das Wagenradscharnier ist um eine Drehachse biegbar. Das Wagenradscharnier ist mit der Blattbiegevorrichtung gekoppelt und so positioniert, dass die Drehachse im Wesentlichen mit der Gegenbiegungsachse ausgerichtet ist.

Aufgabe der vorliegenden Erfindung ist es, ein Kopplungsglied für eine Positioniereinrichtung, insbesondere eine Positioniereinrichtung in Portalbauweise (bekannt auch als sog. Gantry-System), z.B. einen XY-Tisch, vorzuschlagen, das in Hinblick auf gewünschte und unerwünschte Verschwenkungen verbesserte Steifigkeitseigenschaften aufweist.

Aufgabe der vorliegenden Erfindung ist es weiter, eine entsprechende Positioniereinrichtung vorzuschlagen.

Hiervon ausgehend wird der Gegenstand des unabhängigen Anspruchs 1 vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Aufgrund des Designs des Kopplungsglieds wird eine hohe Steifigkeit erzielt, insbesondere betreffend eine - in der Regel nicht gewünschte - Verschwenkung um die zweite Linearrichtung. Demgegenüber ist eine - in der Regel gewünschte - Verschwenkung um eine dritte Linearrichtung, die senkrecht zur sowohl der ersten Linearrichtung als auch der zweiten Linearrichtung (also beispielsweise eine Vertikalrichtung) ist, zu einem gewissen Grad möglich, was an anderer Stelle noch näher ausgeführt werden wird.

Die Positioniereinrichtung, in der das Kopplungsglied eingesetzt werden kann, ist beispielsweise als Positioniereinrichtung in Portalbauweise (bekannt auch als sog. Gantry-System) ausgebildet. Beispielsweise handelt es sich bei der Positioniereinrichtung um einen sog. XY-Tisch bzw. um ein sog. H-Portal.

Die erste Linearführung führt die zweite Linearführung entlang der ersten Linearrichtung, üblicherweise mittels eines entsprechend ausgebildeten Elektroantriebs. Wie mit Bezug auf die Ausführungsbeispiele in den Zeichnungen noch näher ausgeführt werden wird, kann die Positioniereinrichtung auch mehrere erste Linearführungen umfassen.

Die zweite Linearführung führt den zweiten Laufwagen entlang der zweiten Linearrichtung im Wesentlichen senkrecht zur ersten Linearrichtung. Die zweite Linearführung ist beispielsweise als ein Querbalken ausgebildet, der oberhalb der ersten Linearführung(en) angeordnet ist und am ersten Laufwagen angreift, beispielsweise so, dass er die erste(n) Linearführung(en) überbrückt. Auf diese Weise entsteht das besagte H-Portal. Zur Führung des zweiten Laufwagens umfasst die zweite Linearführung üblicherweise einen entsprechend ausgebildeten Elektroantrieb.

An dem zweiten Laufwagen ist bei einer Ausführungsform ein Funktionselement angeordnet, beispielsweise in Gestalt eines Bestückungsgeräts, eines Mikroskops, eines Lasers, usw.

Positioniereinrichtungen der vorgenannten Art kommen in einem großen Anwendungsbereich zum Einsatz, und entsprechend vielfältig sind die Möglichkeiten zur Ausgestaltung des Funktionselements.

Die hier beschriebenen Aspekte sind auf keine bestimmte Anwendung eingeschränkt. Das Funktionselement kann darüber hinaus mit einem weiteren Elektroantrieb ausgestattet sein, der eine Führung einer Funktionseinheit (beispielsweise ein Bestückungskopf, ein Greifer oder dergleichen) entlang einer weiteren Richtung, z.B. der dritten Linearrichtung führen kann.

Das Kopplungsglied ist für die Ausbildung der Kopplung zwischen dem ersten Laufwagen (der von der ersten Linearführung geführt wird) und der zweiten Linearführung ausgestaltet. Die zweite Linearführung kann mit Hilfe des ersten Laufwagens entlang der ersten Linearrichtung bewegt werden, und die dafür notwendige Kopplung zwischen der zweiten Linearführung und dem ersten Laufwagen ist insbesondere mittels des Kopplungsglieds ausgebildet.

Nach einer Ausführungsform ist das Kopplungsglied an der zweiten Linearführung befestigt. Weiterhin ist das Kopplungsglied beispielsweise unmittelbar - also ohne ein zusätzliches Aufnahmeglied bzw. Zwischenkopplungselements oder dergleichen - am ersten Laufwagen befestigt.

Nach einer Ausführungsform der Positioniereinrichtung sind sowohl das Zentralteil als auch die beiden Seitenteile des Kopplungsglieds an der zweiten Linearführung befestigt, wobei ausschließlich das Zentralteil, nicht aber die beiden Seitenteile am ersten Laufwagen befestigt sind.

Beispielsweise ist die erste Gesamterstreckung des Kopplungsglieds in erster Linearrichtung mindestens 1,5 mal so lang wie die zweite Gesamterstreckung in zweiter Linearrichtung. Die erste Gesamterstreckung kann sogar mindestens doppelt so lang sein wie die zweite Gesamterstreckung.

Die beiden Seitenteile, die das Zentralteil an beiden Längsseiten flankieren, als auch das Zentralteil weisen beispielsweise dieselbe erste Gesamterstreckung in erster Linearrichtung auf. Die beiden Seitenteile flankieren das Zentralteil, jedoch ohne dieses vollständig zu umgeben. Beispielsweise bilden das Zentralteil als auch die beiden Seitenteile die senkrecht zur ersten Linearrichtung liegenden Stirnseiten des Kopplungsglieds gemeinsam aus.

Durch die Mehrzahl der Verbindungsblattfedern, die die Verbindung zwischen den Seitenteilen und dem Zentralteil ausbilden (und nach einer Ausführungsform auch den Abstand zwischen dem Zentralteil und der beiden Seitenteile ausbilden), wird eine Verschwenkung um die parallel zur dritten Linearrichtung verlaufenden Zentralachse (als Rotationsachse) bis zu einem gewissen Grad ermöglicht. Inwieweit eine Verschwenkung um diese Achse möglich ist, kann durch eine entsprechende Dimensionierung und Anordnung der Verbindungsblattfedern, z.B. deren Winkellage, Länge, Dicke und/oder Material bestimmt werden.

Jede der Verbindungsblattfedern ist gemäß einer Ausführungsform in einer Ebene parallel zur dritten Linearrichtung angeordnet. Mit anderen Worten liegt jede Normale der Verbindungsblattfedern senkrecht zur dritten Linearrichtung.

Gemäß einer Ausführungsform sind die Verbindungsblattfedern sternförmig zueinander angeordnet, derart, dass sich die Ebenen, in denen die Verbindungsblattfedern angeordnet sind, in der Zentralachse des Zentralteils schneiden. Dies ist beispielsweise dadurch bewerkstelligt, dass jede der Ebenen, in denen die Verbindungsblattfedern angeordnet sind, in einem betragsmäßigen Winkel, bezogen auf die zweite Linearrichtung, von größer/gleich 0° und kleiner 90° liegt, sodass insbesondere keine der Verbindungsblattfedern in einer Ebene parallel zur ersten Linearrichtung angeordnet ist, wobei eine Anordnung in einer Ebene parallel zur zweiten Linearrichtung (entsprechend 90° zur ersten Linearrichtung) möglich ist. Gleichzeitig ist z.B. eine symmetrische Anordnung der Verbindungsblattfedern vorgesehen, derart, dass die Winkel der Verbindungsblattfedern, die eines der Seitenteile mit dem Zentralteil verbinden, den Winkeln der Verbindungsblattfedern entsprechen, die das andere der Seitenteile mit dem Zentralteil verbinden.

Die Verbindungsblattfedern sind gemäß einer Ausführungsfonn in einem jeweiligen Mindestabstand zueinander angeordnet, beispielsweise von, bezogen auf Zentralachse, mindestens einigen Grad.

Die Verbindungsblattfedern sind gemäß einer Ausführungsfonn jeweils als eine Einzelblattfeder ausgebildet.

Die Verbindungsblattfedern sind gemäß einer Ausfiihrungsform weiter für eine Verschwenkung der beiden Seitenteile um die Zentralachse des Zentralteils (als parallel zur dritten Linearrichtung liegende Rotationsachse) ausgestaltet. Dazu schneiden sich die Ebenen, in denen die Vertikalblattfedern angeordnet sind, wie ausgeführt, in der Zentralachse des Zentralteils. In wieweit eine Verschwenkung zugelassen werden soll, kann durch entsprechende Anordnung und Dimensionierung der Verbindungsblattfedern bestimmt werden.

Die Mehrzahl von Verbindungsblattfedern beträgt z.B. sechs, von denen jeweils drei die Verbindung zu jeweils einem der Seitenteile ausbilden. Jedes Seitenteil ist also beispielsweise über drei Verbindungsblattfedern mit dem Zentralteil verbunden. Eine bezogen auf die erste Gesamterstreckung mittig angeordnete Verbindungsblattfeder liegt z.B. in einer Ebene, deren Normale parallel zu ersten Linearrichtung liegt. Die beiden anderen Verbindungsblattfedern sind zum Beispiel an Endabschnitten vorgesehen, und dort in einem Winkel von, bezogen auf die zweite Linearrichtung, betragsmäßig 25° bis 80° oder 45° bis 60° angeordnet. Gleichzeitig ist z.B. eine symmetrische Anordnung der Verbindungsblattfedern vorgesehen, derart, dass die Winkel der Verbindungsblattfedern, die eines der Seitenteile mit dem Zentralteil verbinden, den Winkeln der Verbindungsblattfedern entsprechen, die das andere der Seitenteile mit dem Zentralteil verbinden.

Zur Erzielung vorteilhafter Steifigkeitseigenschaften sind gemäß einer Ausfiihrungsform die Verbindungsblattfedern an den Endabschnitten des Kopplungsglieds vorgesehen sind, und dort weiter von der Zentralachse beabstandet angeordnet, als jede von mindestens zwei der Verbindungsblattfedern, die mittig, bezogen auf eine Gesamterstreckung in erster Linearrichtung des Kopplungsglieds, angeordnet sind.

Wenn vorliegend von einem Abstand zu dem Zentrum des Zentralteils die Rede ist, so ist damit ein parallel zu einer Ebene liegender Abstand gemeint, die durch die erste und zweite Linearrichtung definiert ist. Der besagte Abstand kann also insbesondere ein Abstand zu der (zur dritten Linearrichtung parallelen) Zentralachse sein.

Durch die zueinander beabstandet angeordneten Verbindungsblattfedern entstehen gemäß einer Ausfiihrungsform Teilabschnitte in dem Volumen zwischen dem Zentralteil und den beiden Seitenteilen. Gemäß einer Ausfiihrungsform sind diese Teilabschnitte als Leerräume ausgebildet, womit das Kopplungsglied ein geringes Gewicht aufweist.

Der Abstand zwischen dem Zentralteil und den beiden Seitenteilen beträgt bei einer Ausfiihrungsform beispielsweise mindestens einige Millimeter, beispielsweise ca. 10 mm, und gemäß einer Ausführungsform 12,5 mm. Dieser Abstand kann für beide Seitenteile gleich sein. Entsprechend sind zum Beispiel die diesen Abstand ausbildenden Verbindungsblattfedern dimensioniert.

An dieser Stelle sei betont, dass die Verbindungsblattfedern nicht notwendigerweise eine entlang ihrer Erstreckung gleichbleibende Dicke aufweisen müssen, sondern dass sich die Dicke entlang der Erstreckung verändern kann. Auch müssen die Verbindungsblattfedern nicht allesamt gleichartig ausgebildet sein, sondern können - je nach gewünschter Steifigkeitseigenschaft des Kopplungsglieds - unterschiedliche Dicken aufweisen.

Das Kopplungsglied ist gemäß einer Ausfiihrungsform monolithisch ausgebildet, zum Beispiel aus einem Edelstahl. Somit sind sowohl das Zentralteil als auch die beiden Seitenteile und die diese Teile verbindenden Verbindungsblattfedern gemäß einer Ausführungsfonn aus einem Materialstück, z.B. einem Edelstahlstück, gefertigt.

Gemäß einer anderen Ausführungsform ist das Kopplungsglied 30 mehrteilig ausgebildet, und die beiden Seitenteile und das Zentralteil sind als separate Komponenten gefertigt. Bei dieser Variante weist z.B. jedes der Seitenteile einen sich parallel zur ersten und zweiten Linearrichtung erstreckenden Stützabschnitt auf, an dem die Verbindungsblattfedern angeordnet sind. Die Stützabschnitte tragen also die Verbindungsblattfedern. Das Zentralteil weist dann eine Mehrzahl von Gegenstücken zur Verbindung mit den Verbindungsblattfedern auf. Die jeweilige Verbindung zwischen Gegenstück und Verbindungsblattfeder kann mit einer Anzahl von Schraubverbindungen ausgeführt sein, oder in andere Weise bewerkstelligt sein.

Unabhängig davon, ob das Kopplungsglied einteilig (monolithisch) oder mehrteilig ausgeführt ist, ist eine Montagefläche an der Oberseite des Kopplungsglieds für eine Ankopplung an die zweite Linearführung ausgestaltet, wobei nur die beiden Seitenteile die Montagefläche an der Oberseite des Kopplungsglieds ausbilden, nicht aber das Zentralteil. Die Seitenteile bilden beispielsweise eine ebene Montagefläche aus. Sofern das Kopplungsglied mehrteilig ausgebildet ist, sind z.B. auf den Stützabschnitten an der jeweiligen Unterseite der Seitenteile des Kopplungsglieds Montageblöcke vorgesehen, die die zur Oberseite ragen und dort die Montagefläche für die Ankopplung an die zweite Linearführung mitausbilden, was anhand der Figurenbeschreibung noch deutlicher erläutert werden wird.

Eine Montagefläche an der Unterseite des Kopplungsglieds ist für eine Ankopplung an den ersten Laufwagen ausgestaltet, wobei das Zentralteil einen Abschnitt mit einem U-Profil aufweist, und eine Innenseite des U-Profils die Montagefläche an der Unterseite des Kopplungsglieds ausbildet. Z.B. ist nur das Zentralteil, nicht aber die beiden Seitenteile an der Ausbildung der Montagefläche an der Unterseite des Kopplungsglieds beteiligt. Der erste Laufwagen ist beispielsweise in den Abschnitt mit dem U-Profil eingelassen, sodass die beiden Schenkel des U-Profils des Abschnitts des Zentralteils den ersten Laufwagen seitlich einfassen und die Innenseite des U-Profils auf dem ersten Laufwagen aufliegt.

Gemäß einer Ausführungsform weisen also erste Laufwagen und das Kopplungsglied einen gemeinsam vertikalen Erstreckungsbereich auf, indem der erste Laufwagen entlang der dritten Linearrichtung in den U-profilförmigen Abschnitt des Zentralteils des Kopplungsglieds eingelassen ist; die Innenseite des U-Profils bildet dabei die Montagefläche an der Unterseite des Kopplungsglieds aus.

Gemäß einer Ausführungsform erstrecken sich die Oberseite und die Unterseite jeweils zumindest abschnittsweise parallel zur sowohl der ersten als auch der zweiten Linearrichtung.

Die Positioniereinrichtung ist, wie gesagt, z.B. in Portalbauweise ausgebildet. Hier sind verschiedenste Implementierungen denkbar. Beispielsweise weist die Positioniereinrichtung zwei erste Linearführungen auf, die parallel zueinander angeordnet sind, und die beide einen jeweiligen ersten Laufwagen führen, und an beiden ersten Laufwagen kann ein jeweiliges Kopplungsglied entsprechend einer der oben beschriebenen Ausführungsformen angeordnet sein und eine Kopplung zur zweiten Linearführung ausbilden.

Nach einer anderen Ausführungsform umfasst die Positioniereinrichtung zwei (oder mehr als zwei) äußere Linearführungen, die benachbart und parallel zur ersten Linearführung angeordnet sind und jeweils mindestens einen Hilfswagen entlang die ersten Linearrichtung führen, wobei die zweite Linearführung (über das Kopplungsglied) an den ersten Laufwagen gekoppelt ist, und auch an die beiden Hilfswagen. Zur Ausbildung der Kopplung zwischen der zweiten Linearführung und den beiden Hilfswagen kann an jedem der beiden Hilfswagen eine jeweilige Kopplungsblattfeder befestigt sein, die in einer Ebene parallel zur ersten Linearrichtung und zur dritten Linearrichtung angeordnet ist. Auch diese Kopplungsblattfedern lassen eine Verschwenkung/Rotation um die dritte Linearrichtung (als Rotationsachse) in einem gewissen Grad zu, unterbinden jedoch eine Verschwenkung/Rotation um die erste Linearrichtung (als Rotationsachse) als auch um die zweite Linearrichtung (als Rotationsachse).

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch einen Ausschnitt einer Aufsicht auf eine Positioniereinrichtung gemäß einer oder mehreren Ausführungsformen;
- Fig. 2A: exemplarisch und schematisch einen Ausschnitt einer perspektivischen Ansicht einer Positioniereinrichtung gemäß einer oder mehreren Ausführungsformen;
- Fig. 2B-C: jeweils exemplarisch und schematisch einen Ausschnitt einer Querschnittsansicht einer Positioniereinrichtung gemäß einer oder mehreren Ausführungsformen; und
- Fig. 3: exemplarisch und schematisch perspektivische Ansichten eines Kopplungsglieds gemäß einer oder mehreren Ausführungsformen;
- Fig. 4: exemplarisch und schematisch perspektivische Ansichten und einer Explosionsansicht eines Kopplungsglieds gemäß einer oder mehreren Ausführungsformen; und
- Fig. 5: exemplarisch und schematisch einen Ausschnitt einer perspektivischen Ansicht eines Hilfswagens gemäß einer oder mehreren Ausführungsformen.

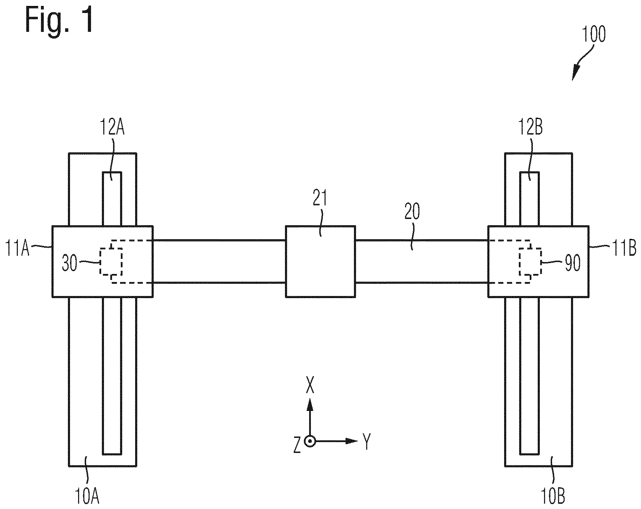

Figur 1 zeigt schematisch und exemplarisch eine Positioniereinrichtung 100. Die Positioniereinrichtung 100 ist in Portalbauweise ausgebildet und umfasst zwei erste Linearführungen 10A und 10B.

Die beiden ersten Linearführungen 10A und 10B führen einen jeweiligen ersten Laufwagen 11A bzw. 11B entlang einer ersten Linearrichtung X. Für diese Führung kann eine jeweilige Führungsschiene oder Führungsnut oder sonstiges Führungsmittel 12A bzw. 12B vorgesehen sein.

Die Positioniereinrichtung 100 umfasst weiter eine zweite Linearführung 20, die einen zweiten Laufwagen 21 entlang einer zweiten, zur ersten Linearrichtung X im Wesentlichen senkrechten Linearrichtung Y führt.

Die zweite Linearführung 20 ist an die beiden ersten Laufwagen 11A, 11B gekoppelt und somit entlang der ersten Linearrichtung X beweglich. Zur Bewirkung der Bewegung in erster und zweiter Linearrichtung X und Y sind entsprechende Elektroantriebe vorgesehen.

Die zweite Linearführung 20 ist somit z.B. als Querbalken ausgebildet, der oberhalb (bezogen auf eine dritte Linearrichtung Z, die senkrecht zur ersten und zur zweiten Linearrichtung X, Y liegt) der ersten Linearführungen 10A, 10B angeordnet ist.

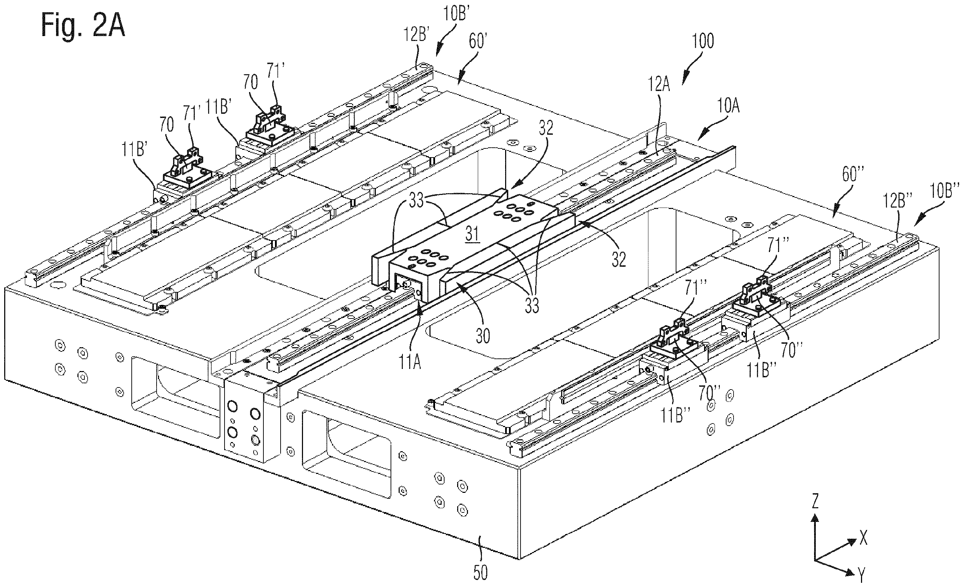

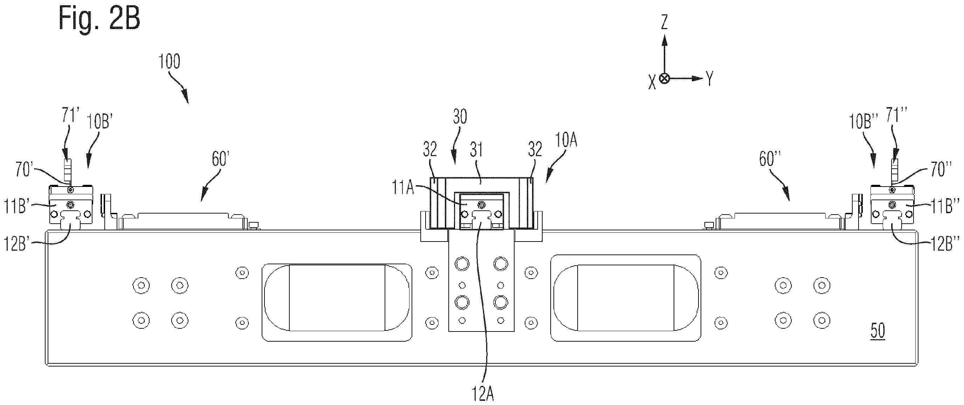

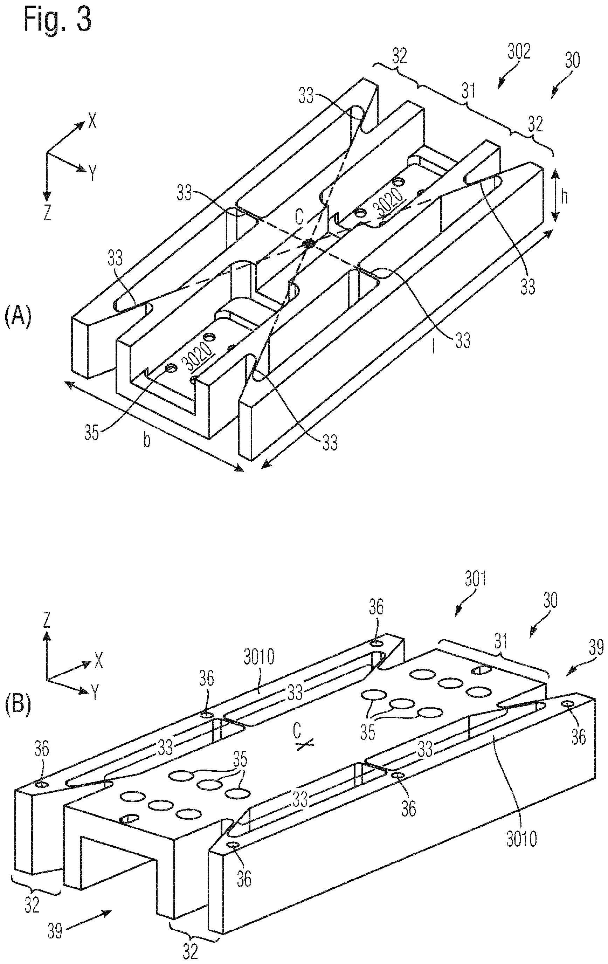

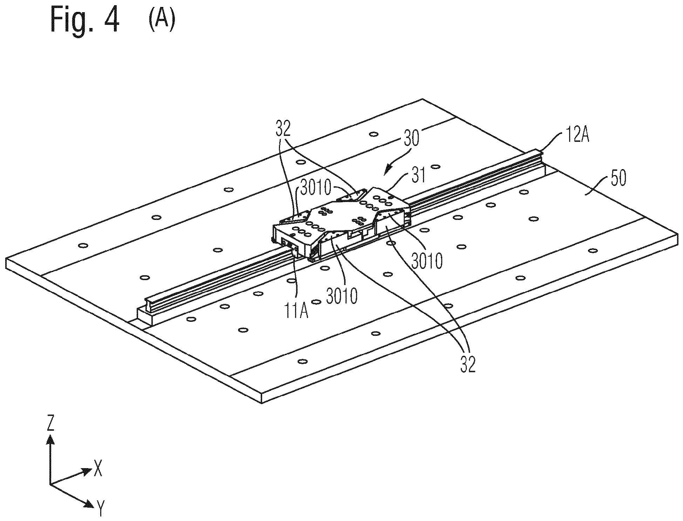

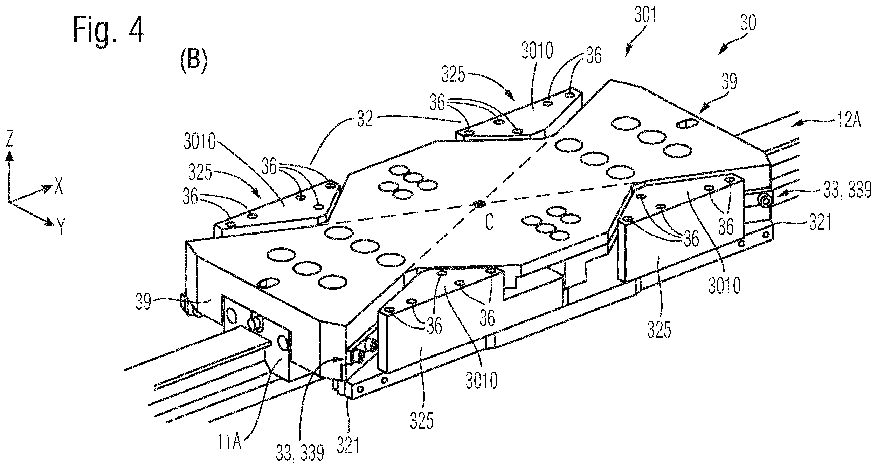

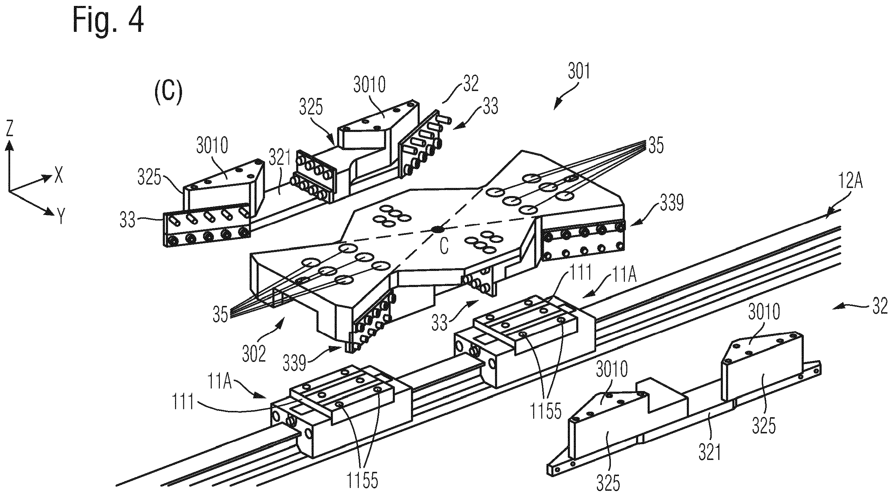

Zur Ausbildung der Kopplung zwischen der zweiten Linearführung 20 und dem ersten Laufwagen 11A ist ein Kopplungsglied 30 vorgesehen, wobei Figuren 3 und 4 zwei Ausführungsformen dieses Kopplungsglieds 30 veranschaulichen, die an späterer Stelle noch im Detail beschrieben sind. In den Figuren 2A-C ist die Anordnung des Kopplungsglieds 30 in einer anderen Ausführungsform der Positioniereinrichtung 100 schematisch und exemplarisch dargestellt, und im Folgenden wird auch auf diese Figuren 2A-C Bezug genommen. Hier sei angemerkt, dass die Figuren 2A-C die Positioniereinrichtung 100 mit dem Kopplungsglied 30 gemäß Figur 3 zeigen, die im Übrigen unveränderte Positioniereinrichtung 100 jedoch in einer anderen Ausgestaltung mit dem Kopplungsglied 30 gemäß Figur 4 ausgestattet sein kann.

Das Kopplungsglied 30 hat eine Oberseite 301 und eine Unterseite 302. Zur Ausbildung der Kopplung zwischen der zweiten Linearführung 20 und dem ersten Laufwagen 11A ist die Oberseite 301 des Kopplungsglieds 30 an der zweiten Linearführung 20 befestigt, und die Unterseite 302 an dem ersten Laufwagen 11A.

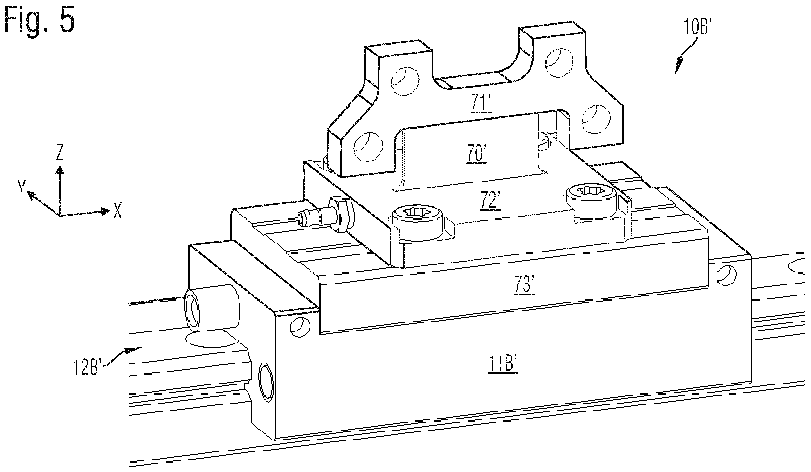

Im Folgenden wird stets Bezug genommen auf diesen ersten Laufwagen 11A, wobei gemäß anderen Ausführungsformen ein weiteres Kopplungsglied 90 (s. Fig. 1) vorgesehen sein kann, das die Kopplung zwischen der zweiten Linearführung 20 und dem weiteren Laufwagen 11B, der in ersten Linearrichtung X geführt wird, herstellt, wie in Fig. 1 schematisch dargestellt. Dieses weitere Kopplungslied 90 kann insbesondere als Kopplungsblattfeder ausgestaltet sein (also anders als das Kopplungsglied 30), was mit Bezug auf die Figuren 2A-C und Figur 5 näher ausgeführt ist.

Das Kopplungsglied 30 weist ein Zentralteil 31 auf, welches von zwei Seitenteilen 32 flankiert ist; an jeder von zwei einander gegenüberliegenden Längsseiten des Zentralteils 31 befindet sich also je einen Seitenteil 32. Bezogen auf die erste und die zweite Linearrichtung X und Y ist das Kopplungsglied 30 im Wesentlichen symmetrisch ausgebildet.

Die beiden Seitenteile 32 sind jeweils in einem Abstand in zweiter Linearrichtung Y zu dem Zentralteil 31 angeordnet, wobei hier verschiedene Ausgestaltungen möglich sind, wie anhand der Figuren 3 und 4 noch verdeutlich werden wird. Eine Mehrzahl von Verbindungsblattfedern 33 verbindet das Zentralteil 31 und die beiden Seitenteile 32 miteinander.

Die Mehrzahl von Verbindungsblattfedern 33 beträgt z.B. bei beiden hier in den Figuren 3 und 4 dargestellten Ausführungsbeispielen sechs, von denen jeweils drei die Verbindung zu jeweils einem der Seitenteile 32 ausbilden. Jedes Seitenteil 32 ist also beispielsweise über drei Verbindungsblattfedern 33 mit dem Zentralteil 31 verbunden. Eine bezogen auf die erste Gesamterstreckung (also Länge l, s. Figur 3) mittig angeordnete Verbindungsblattfeder 33 liegt z.B. in einer Ebene, deren Normale parallel zu ersten Linearrichtung X liegt. Die beiden anderen Verbindungsblattfedern 33 sind zum Beispiel an Endabschnitten vorgesehen, und dort in einem Winkel von, bezogen auf die zweite Linearrichtung Y, betragsmäßig 25° bis 80° oder 45° bis 60° angeordnet. Gleichzeitig ist, wie dargestellt, eine symmetrische Anordnung der Verbindungsblattfedern 33 vorgesehen, derart, dass die Winkel der Verbindungsblattfedern 33, die das linke Seitenteil 32 mit dem Zentralteil 31 verbinden, den Winkeln der Verbindungsblattfedern 33 entsprechen, die das rechte Seitenteil 32 mit dem Zentralteil 31 verbinden.

Das Kopplungsglied 30 ist derart ausgestaltet, dass es eine Verschwenkung/Rotation um die Zentralachse C des Zentralteils 31 (parallel zur dritten Linearrichtung Z als Rotationsachse durch das Zentrum des Zentralteils 31) bis zu einem gewissen Grad ermöglicht, jedoch die Rotation um die erste Linearrichtung X (als Rotationsachse) und insbesondere um die zweite Linearrichtung Y (als Rotationsachse) weitgehend vermeidet oder gar vollständig unterbindet. Dazu schneiden sich die Ebenen, in denen die Verbindungsblattfedern 33 angeordnet sind, in der Zentralachse C des Zentralteils 31.

Beispielsweise ist die erste Gesamterstreckung des Kopplungsglieds 30 in erster Linearrichtung X, also seine Länge l, mindestens 1,5 mal so lang wie die zweite Gesamterstreckung in zweiter Linearrichtung Y, also seine Breite b. Die Länge l kann sogar mindestens doppelt so lang sein wie die die Breite b. Eine dritte Gesamterstreckung des Kopplungsglieds 30 in dritter Linearrichtung Z, also eine Höhe h, beträgt beispielsweise weniger als die Breite b. Gemäß beiden Ausführungsformen der Fig. 3 und 4 beträgt die Länge l z.B. 200 mm, die Breite b 100 mm, und die Höhe h 30 mm.

Wohingegen eine Verschwenkung/Rotation um die zweite Linearrichtung Y (als Rotationsachse) - wie ausgeführt - unerwünscht ist, kann eine Verschwenkung/Rotation um die dritte Linearrichtung Z (als Rotationsachse) bis zu einem gewissen Grad erwünscht sein. Dazu ist jede der Verbindungsblattfedern 33, wie ausgeführt, in einer Ebene parallel zu der dritten Linearrichtung Z angeordnet. Die Verbindungsblattfedern 33 sind, wie dargestellt, sternförmig zueinander angeordnet. Die Ebenen, in denen die Verbindungsblattfedern 33 angeordnet sind, schneiden sich in der Zentralachse C. Diese Achse C bildet also die Rotationsachse (bezogen auf eine Rotation um die dritte Linearrichtung Z) des Kopplungsglieds 30.

Bei den in den Zeichnungen dargestellten Ausführungsbeispielen sind insgesamt sechs Verbindungsblattfedern 33 vorgesehen, die in einem Winkel, bezogen auf die zweite Linearrichtung Y, von betragsmäßig entweder 0° (die beiden mittigen Verbindungsblattfedern 33) oder etwa 60° (die vier Verbindungsblattfedern 33 an den Endabschnitten) angeordnet sind, um das Zentralteil 31 mit Seitenteilen 32 zu verbinden. Jedoch sind gemäß einer Ausführungsform zwischen dem Zentralteil 31 und den Seitenteilen 32 keine Verbindungsblattfedern vorgesehen, die sich parallel zur ersten Linearrichtung X erstrecken würden. Wiewohl können die Winkellagen insbesondere der Verbindungsblattfedern 33 an den Endabschnitten zur Erzielung bestimmter Steifigkeitseigenschaften anders gewählt werden.

Die Verbindungsblattfedern 33 sind für eine Verschwenkung der Seitenteile 32 um die um Zentralachse C (als Rotationsachse parallel zur dritten Linearrichtung Z) ausgestaltet. Die Verbindungsblattfedern 33 sind weiter derart ausgestaltet, dass eine Verschwenkung/Rotation um die zweite Linearrichtung Y (als Rotationsachse) weitgehend vermieden bzw. vollständig unterbunden wird, wohingegen eine Verschwenkung/Rotation um die dritte Linearrichtung Z (als Rotationsachse) bis zu einem gewissen Grad möglich ist. Inwieweit eine Verschwenkung/Rotation um diese Achse ermöglicht wird, kann durch eine entsprechende Anordnung und Dimensionierung der Verbindungsblattfedern 33 bestimmt werden.

Im Übrigen ist das Kopplungsglied 30 auch aufgrund der Ausgestaltung und Anordnung der Verbindungsblattfedern 33 derart ausgebildet, dass auch eine Verschwenkung/Rotation um die erste Linearrichtung X (als Rotationsachse) weitgehend vermieden bzw. vollständig unterbunden wird. Allerdings sind die Belastungen betreffend eine Verschwenkung/Rotation um die zweite Linearrichtung Y (als Rotationsachse) aufgrund der parallel zur ersten Linearrichtung X wirkenden starken Beschleunigungskräfte sowie aufgrund der Anordnung der zweiten Linearführung 20 oberhalb der ersten Linearführungen 10A, 10B' und 10B" vergleichsweise hoch, und damit eine höhere Steifigkeit betreffend eine Verschwenkung/Rotation um eben diese die zweite Linearrichtung Y (als Rotationsachse) erwünscht. Insbesondere kann gemäß einer Ausführungsform des Kopplungsglieds 30 die Steifigkeit betreffend eine Verschwenkung/Rotation um die zweite Linearrichtung Y (als Rotationsachse) größer sein als die Steifigkeit betreffend eine Verschwenkung/Rotation um die erste Linearrichtung X (als Rotationsachse).

Je nach gewünschter Steifigkeit des Kopplungsglieds 30 können die Dicken der Verbindungsblattfedern 33 dimensioniert werden. Zum Beispiel liegt es im Rahmen der vorliegenden Erfindung, dass die Dicken der Verbindungsblattfedern 33 voneinander abweichen und/oder, dass die Dicke einer jeweiligen der Verbindungsblattfedern 33 entlang ihrer Erstreckung variiert.

Mit Bezug auf die Figuren 2A-C sowie weiterhin auf die Fig. 3 und 4 wird nachstehend etwas näher auf eine beispielhafte Installation des Kopplungsglieds 30 in der Positioniereinrichtung 100 eingegangen.

Das Kopplungsglied 30 hat eine Oberseite 301 und eine Unterseite 302, und ist derart in der Positioniereinrichtung 100 angeordnet, dass eine Montagefläche 3020 an der Unterseite 302, die nur von dem Zentralteil 31 ausgebildet ist, am ersten Laufwagen 11A befestigt ist, und dass eine Montagefläche 3010 an der Oberseite 301, die nur von den Seitenteilen 32 ausgebildet ist, an der zweiten Linearführung 20 befestigt ist. Die zweite Linearführung 20 ist nicht am Zentralteil 31 befestigt, und der erste Laufwagen 11A ist nicht an den Seitenteilen 32 befestigt.

Das Zentralteil 31 hat bei den dargestellten Ausführungsformen einen Abschnitt mit einem U-Profil, wobei eine Innenseite des U-Profils die Montagefläche 3020 an der Unterseite 302 des Kopplungsglieds 30 ausbildet. Der erste Laufwagen 11A ist, wie dargestellt, in den Abschnitt mit dem U-Profil eingelassen, sodass die beiden Schenkel des U-Profils des Abschnitts des Zentralteils 31 den ersten Laufwagen 11A seitlich einfassen und die Innenseite des U-Profils auf dem ersten Laufwagen aufliegt. Somit kann die Positioniereinrichtung 100 insgesamt eine kleine Höhe aufweisen.

Wie in Fig. 4, Ansicht (C), dargestellt, können anstatt nur ein erster Laufwagen 11A auch mehrere, z.B. zwei Laufwagen 11A vorgesehen sein. Die Aufteilung in mehrere erste Laufwagen 11A kann eine Gewichtsreduzierung herbeiführen, da die Verbindung zum Kopplungsglied 30 eben nicht entlang der gesamten Länge l ausgebildet sind, sondern nur teilweise, wie Fig. 4, Ansicht (C), dargestellt.

Die Verbindung zu dem bzw. den ersten Laufwagen 11A kann über eine oder mehrere Schrauben bewerkstelligt werden. Hierzu sind entsprechende Aussparungen bzw. Gewinde 35, 1155 sowohl an dem bzw. den Laufwagen 11A als auch im U-Profil-Abschnitt des Zentralteils 31 vorgesehen, bei den dargestellten Ausführungsformen jeweils sechs an der Zahl (von denen übersichtshalber nicht alle mit den Bezugszeichen versehen sind).

Nur das Zentralteil 31, nicht aber die beiden Seitenteile 32 ist an der Ausbildung der Montagefläche 3020 an der Unterseite 302 des Kopplungsglieds 30 beteiligt. D.h., die beiden Seitenteile 32 greifen nicht direkt am ersten Laufwagen 11A an, sondern nur mittelbar über die Verbindungsblattfedern 33 und das Zentralteil 31.

Andererseits bilden nur die beiden Seitenteile 32 die Montagefläche 3010 an der Oberseite 301 des Kopplungsglieds 30 aus, nicht aber das Zentralteil 31. D.h., dass nur die beiden Seitenteile 32 direkt an der zweiten Linearführung 20 befestigt sind. Die Ausbildung dieser Befestigung kann wiederum durch über eine oder mehrere Schrauben bewerkstelligt werden. Hierzu sind entsprechende Aussparungen bzw. Gewinde 36 in den Seitenteilen 32 als auch an der zweiten Linearführung 20 (nicht dargestellt) vorgesehen (von denen übersichtshalber nicht alle mit den Bezugszeichen versehen sind).

Anstelle von Schrauben können in die Aussparungen/Gewinde 35, 36, 1155 auch Befestigungsstifte oder andere Befestigungsmittel eingreifen, die die Verbindung zwischen Kopplungsglied 30 und erstem/ersten Laufwagen 11A einerseits sowie die Verbindung zwischen Kopplungsglied 30 und zweiter Linearführung 20 andererseits bewirken.

Gemäß dem in den Figuren 2A-C dargestellten Ausführungsbeispiel umfasst die Positioniereinrichtung 100 weiter zwei äußere Linearführungen 10B' und 10B", die benachbart und parallel zur ersten Linearführung 10A angeordnet sind und jeweils mindestens einen (in den dargestellten Ausführungsbeispielen zwei) Hilfswagen 11B`, 11B" entlang der ersten Linearrichtung X führen. Die Führungen 10A, 10B' und 10B" sind an einer Basiskonstruktion 50 der Positioniereinrichtung 100 befestigt (s. auch Fig. 4, Ansicht (A)).

Die zweite Linearführung 20 ist sowohl an den ersten Laufwagen 11A als auch an die insgesamt vier Hilfswagen 11B`, 11B" gekoppelt und wird so entlang der ersten Linearrichtung X bewegt. Die erste Linearführung 10A führt, wie gesagt, den ersten Laufwagen 11A entlang der ersten Linearrichtung X. Für diese Führung ist eine Schiene 12A vorgesehen. Die beiden äußeren Linearführungen 10B' und 10B" sind in ähnlicher Weise ausgestaltet, und umfassen zur Führung der Hilfswagen 11B' und 11B" jeweils eine entsprechend angeordnete Schiene 12 B', 12 B".

Ebenfalls an der Basiskonstruktion 50 befestigt sind die magnetischen Pfade 60', 60" zweier Linearmotoren. Auf Einzelheiten dieser Komponenten soll hier nicht näher eingegangen werden. Dem Fachmann sind, beispielsweise aus der EP 0 793 870 B1, einige Varianten bekannt, wie ein magnetischer Pfad für eine Positioniereinrichtung in der vorliegenden Gestalt ausgebildet werden kann.

Die zweite Linearführung 20 ist sowohl an den ersten Laufwagen 11A gekoppelt als auch an die vier Hilfswagen 11B' und 11B". Bei der dargestellten Ausführungsform wird die zweite Linearführung 20 durch entsprechende Bestromung der Linearmotoren entlang der ersten Linearrichtung X bewegt.

Zur Kopplung der zweiten Linearführung 20 an den ersten Hilfswagen 11A ist das Kopplungsglied 30 vorgesehen, das entsprechend den obigen Ausführungen ausgestaltet ist.

Zur Ausbildung der Kopplung zwischen der zweiten Linearführung 20 und den Hilfswagen 11B`, 11B" ist an jedem dieser Hilfswagen 11B`, 11B" eine jeweilige Kopplungsblattfeder 70`, 70"befestigt, die in einer Ebene parallel zur ersten Linearrichtung X und zur dritten Linearrichtung Z angeordnet ist.

Die Kopplungsblattfedern 70', 70" bilden die Kopplung zur zweiten Linearführung 20 aus. Dabei ist die Kopplung der Kopplungsblattfedern 70', 70" an die zweite Linearführung 20 derart ausgestaltet, dass eine Rotation/Verschwenkung der zweiten Linearführung 20 um die dritte Linearrichtung Z (als Rotationsachse) bis zu einem gewissen Grad ermöglicht ist, jedoch eine Verschwenkung/Rotation um die erste Linearrichtung X (als Rotationsachse) als auch um die zweite Linearrichtung Y (als Rotationsachse) vermieden wird.

Gemäß einer Ausführungsform der Positioniereinrichtung 100 ist zur Kopplung der zweiten Linearführung 20 an die erste Linearführung 10A sowie die Führungen 10B', 10B" nur ein einziges Kopplungsglied 30 vorgesehen. Die Kopplung der zweiten Linearführung 20 an die Hilfswagen 11B`, 11B" erfolgt über weitere Kopplungselemente, die nicht wie das Kopplungsglied 30 ausgestaltet sind, sondern in anderer Weise, beispielsweise als besagte Kopplungsblattfedern 70`, 70". Aufgrund der Kopplungsblattfedern 70', 70" kann die Positioniereinrichtung 100 z.B. eine thermisch bedingte Ausdehnung der zweiten Linearführung 20 tolerieren.

Eine beispielhafte Ausführungsform der Hilfswagen 11B`, 11B" ist in der Figur 5 veranschaulicht. Der Hilfswagen 11B` (die übrigen Hilfswagen sind in gleicher Weise ausgestaltet) ist mit zwei Aufsatzelementen 72` und 73` bestückt, und auf dem obersten Aufsatzelement 72` befindet sich die Kopplungsblattfeder 70`. Die Kopplungsblattfeder 70` geht über in ein weiteres Kopplungsmittel 71', das für eine Befestigung an der zweiten Linearführung 20 ausgestaltet ist.

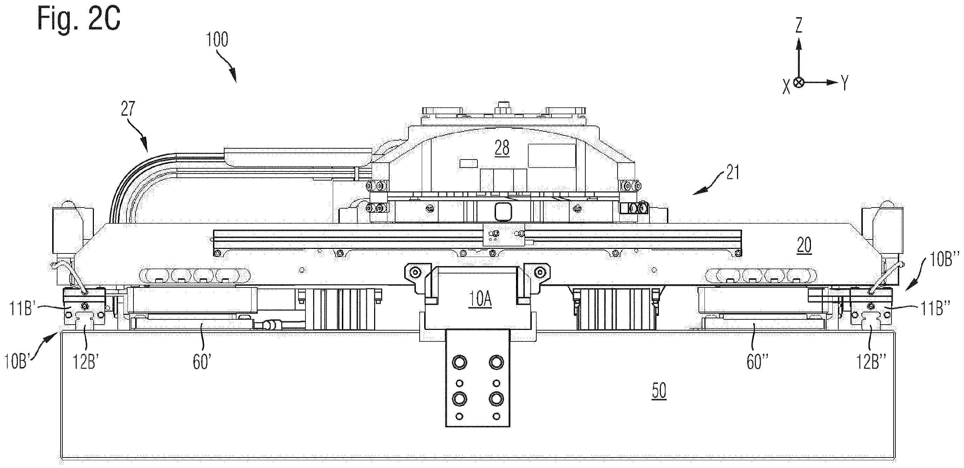

Bezugnehmend auf die Figur 2C führt die zweite Linearrichtung 20 den zweiten Laufwagen 21 entlang der zweiten Linearrichtung Y. Der zweite Laufwagen 21 ist mit einem Funktionselement 28 versehen, das beispielsweise über einen flexiblen Strang 27 angesprochen und gesteuert wird. Beispiele für verschiedene Funktionselemente sind bereits oben erwähnt worden, und es sei an dieser Stelle nochmals betont, dass die vorliegende Erfindung nicht auf ein bestimmtes Funktionselement bzw. ein bestimmtes Anwendungsgebiet der Positioniereinrichtung 100 beschränkt ist.

Nachstehen werden mit Bezug auf die Figuren 3 und 4 weitere beispielhafte Merkmale des Kopplungsglieds 30 erläutert.

Bei beiden Ausführungsformen weisen die beiden Seitenteile 32, die das Zentralteil 31 an beiden Seiten flankieren, als auch das Zentralteil 31 dieselbe Länge l auf. Die beiden Seitenteile 32 flankieren das Zentralteil 31, jedoch ohne dieses vollständig zu umgeben. So bilden das Zentralteil 31 als auch die beiden Seitenteile 32 die senkrecht zur ersten Linearrichtung liegenden Stirnseiten 39 des Kopplungsglieds 30 gemeinsam aus.

Bei beiden Ausführungsformen beträgt die Mehrzahl von Verbindungsblattfedern 33, wie schon beschrieben sechs, von denen jeweils drei die Verbindung zu jeweils einem der Seitenteile 32 ausbilden. Jedes Seitenteil 32 ist also beispielsweise über drei Verbindungsblattfedern 33 mit dem Zentralteil 31 verbunden. Eine bezogen auf die Länge l mittig angeordnete Verbindungsblattfeder 33 liegt z.B. in einer Ebene, deren Normale parallel zu ersten Linearrichtung X liegt. Die beiden anderen Verbindungsblattfedern 33 sind zum Beispiel an den Endabschnitten vorgesehen, und dort in einem Winkel von, bezogen auf die zweite Linearrichtung Y, betragsmäßig 25° bis 80° oder 45° bis 60° angeordnet.

Die jeweils beiden an den Endabschnitten vorgesehenen Verbindungsblattfedern 33 sind weiter von der Zentralachse C (in radialer Richtung zu dieser Achse) beabstandet als die mittigen Verbindungsblattfedern 33, z.B. mindestens 1,41 (Wurzel aus 2) mal, oder mindestens zweimal so weit wie die mittigen Verbindungsblattfedern 33.

Die Verbindungsblattfedern 33 begrenzen gemäß der in Figur 3 dargestellten Ausfiihrungsform des Kopplungsglieds 30 Teilabschnitte des Volumens zwischen dem Zentralteil 31 und den beiden Seitenteilen 32. Diese Teilabschnitte sind als Leerräume ausgebildet, und ermöglichen somit ebenfalls eine Verschwenkung/Rotation um die dritte Linearrichtung Z (als Rotationsachse).

Das in Figur 3 dargestellte Kopplungsglied 30 ist z.B. aus einem Stück gefertigt, also monolithisch. D.h., das Zentralteil 31, die beiden Seitenteile 32 sowie die Verbindungsblattfedern 33 sind aus einem Materialstück, z.B. einem Stück Edelstahl, gefertigt.

Weiter besteht das Zentralteil 31 bei dieser Ausfiihrungsform im Wesentlichen aus dem Abschnitt mit dem U-Profil. Wie in Ansicht (A) der Figur 3 dargestellt, ist die Innenseite des U-Profils, die die Montagefläche 3020 ausbildet, durch Aussparungsgebiete strukturiert. In die beiden dargestellten Aussparungsgebiete 3020 sind Kopplungsstücke 111 der ersten Laufwagen 11A (s. Figur 4, Ansicht (C)) formschlüssig eingelassen. Der U-profilförmige Abschnitt des Zentralteils 31 der in Figur 4 dargestellten Ausfiihrungsform kann an der entsprechenden Innenseite (hier nicht dargestellt) gleichermaßen ausgebildet sein.

Bei der in Fig. 4 dargestellten Ausführungsform ist das Kopplungsglied 30 mehrteilig ausgebildet, und die beiden Seitenteile 32 und das Zentralteil 31 sind als separate Komponenten gefertigt. Jedes der Seitenteile 32 weist einen sich parallel zur ersten und zweiten Linearrichtung X, Y erstreckenden Stützabschnitt 321 auf, an dem die Verbindungsblattfedern 33 für die Endabschnitte angeordnet sind. Zudem sind an den Stützabschnitten 321 Montageblöcke 325 vorgesehen, die die zur Oberseite 301 ragen und dort die Montagefläche 3010 für die Ankopplung an die zweite Linearführung 20 ausbilden. Die beiden Stützabschnitte 321 mit den Verbindungsblattfedern 33 und den Montageblöcken 325 können jeweils monolithisch ausgebildet sein. An jedem der Seitenteile 32 ist einer der beiden Montageblöcke 325 mit einer der mittigen Verbindungsblattfedern 33 verbunden, die bei der dargestellten Ausfiihrungsform am Zentralteil 31 vorgesehen sind (s. Fig. 4C, gemäß der bei dem linken Seitenteil 32 der in X-Richtung vorderer Montageblock 325 mit der linken mittigen Verbindungsblattfeder 33 an das Zentralteil 31 gekoppelt ist, und gemäß der bei dem rechten Seitenteil 32 der in X-Richtung hintere Montageblock 325 mit der rechten mittigen Verbindungsblattfeder 33 an das Zentralteil 31 gekoppelt ist).

Das Zentralteil 31 weist eine Mehrzahl von Gegenstücken 339 zur Verbindung mit den Verbindungsblattfedern 33 auf. Für jede Verbindungsblattfeder 33 ist je mindestens ein Gegenstück 339 vorgesehen, z.B. je zwei Gegenstücke 339. Die jeweilige Verbindung zwischen Gegenstück(en) 339 und Verbindungsblattfeder 33 ist mit einer Anzahl von Schraubverbindungen ausgeführt. Z.B. sind für jede Seite einer der Blattfedern 33 je fünf Schrauben vorgesehen, womit zur Ausbildung der Verbindung der Seitenteile 32 mit dem Zentralteil 31 insgesamt 60 Schrauben einzusetzen wären. Dazu alternative Varianten lägen natürlich im Rahmen der Erfindung.

Bei der mehrteiligen Ausführung gemäß Fig. 4 sind das Zentralteil 31 und die beiden Seitenteile 32 geometrisch aufeinander abgestimmt, so dass ein insgesamt kompaktes Kopplungsglied 30 entsteht. An den beiden Längsseiten sind bei dem Zentralteil 31 Einbuchtungen ausgebildet, in die die Montageblöcke 325 eingelassen werden, ohne jedoch einen Kontakt mit dem Zentralteil 31 auszubilden. Bei der dargestellten Ausführungsform sind die Einbuchtungen an die Ausrichtung der Verbindungsblattfedern 33 an den Endabschnitten angepasst. Flanken der Einbuchtungen bilden die Gegenstücke 339 aus und nehmen die Verbindungsblattfedern 33 an den Endabschnitten auf. Im Bereich des Zentrums des Zentralteils 33 ist keine Einbuchtung vorgesehen; stattdessen ragen dort die mittigen Verbindungsblattfedern 33 von der Oberseite 301 zur Unterseite 302, sodass sie mit den Montageblöcken 325 über besagte jeweils 10 Schrauben (oder in anderer Weise) verbunden werden können.

Das hier beschriebene Kopplungsglied 30 weist aufgrund des seines geometrischen Designs eine hohe Steifigkeit betreffend translatorische Kräfte entlang der drei Linearrichtungen X, Y und Z auf sowie eine hohe Steifigkeit betreffend rotatorische Kräfte um die erste Linearrichtung X (als Rotationsachse) und insbesondere um die zweite Linearrichtung Y (als Rotationsachse). Mit Blick auf die rotatorische Kräfte um die dritte Linearrichtung Z (als Rotationsachse) weist das Kopplungsglied 30 eine Flexibilität auf, um eine Rotation/Verschwenkung um diese Achse bis zu einem gewissen Grad zuzulassen.

Das Kopplungsglied 30 erlaubt es, die Positioniereinrichtung 100 mit einem geringen Kippfehler (sog. Abbe Error) bereitzustellen. Dies kann weiter dadurch begünstigt werden, indem das Kopplungsglied 30 eine dritte Gesamterstreckung (Höhe h, s. Fig. 3) in dritter Linearrichtung Z aufweist, die deutlich geringer ist als sowohl die erste Gesamterstreckung (Länge l) als auch als die zweite Gesamterstreckung (Breite b). Beispielsweise beträgt die Höhe h nicht mehr als 50%, und nicht mehr als 30% der Länge l. Vorteilhaft erweist sich hier auch die Möglichkeit, den ersten Laufwagen in den U-profilförmigen Abschnitt des Zentralteils 31 des Kopplungsglieds 30 einzulassen, sodass ein insgesamt niedriger Aufbau erzielt wird.

Gemäß einer Ausführungsform weisen also erste Laufwagen 11A (bzw. die ersten Laufwagen 11A) und das Kopplungsglied 30 einen gemeinsam vertikalen Erstreckungsbereich auf, indem der erste Laufwagen 11A (bzw. die ersten Laufwagen 11A) entlang der dritten Linearrichtung in den U-profilförmigen Abschnitt des Zentralteils 31 des Kopplungsglieds 30 eingelassen ist; eine Innenseite des U-Profils bildet dabei die Montagefläche 3020 an der Unterseite 302 des Kopplungsglieds 30 aus.

Das Kopplungsglied 30 kann - wie ausgeführt - aus einem Edelstahl gefertigt sein, oder einem anderen Material, das ein hohes Elastizitätsmodul ("Young modulus") ermöglicht.

## Patentansprüche

1. Kopplungsglied (30) in einer Positioniereinrichtung (100), die eine erste Linearführung (10A) zur Führung eines ersten Laufwagens (11A) entlang einer ersten Linearrichtung (X) sowie eine zweite Linearführung (20) zur Führung eines zweiten Laufwagens (21) entlang einer zweiten, zur ersten Linearrichtung (X) im Wesentlichen senkrechten Linearrichtung (Y) umfasst, wobei das Kopplungsglied (30) für eine Ausbildung einer Kopplung zwischen dem ersten Laufwagen (11A) und der zweiten Linearführung (20) ausgestaltet ist und wobei:
- ein Zentralteil (31);
- zwei, jeweils in einem Abstand in zweiter Linearrichtung (Y) zu dem Zentralteil (31) angeordnete und das Zentralteil (31) flankierende Seitenteile (32); und
- eine Mehrzahl von Verbindungsblattfedern (33), die eine Verbindung zwischen dem Zentralteil (31) und den beiden Seitenteilen (32) ausbilden, wobei sich die Ebenen, in denen die Verbindungsblattfedern (33) angeordnet sind, in einer Zentralachse (C) des Zentralteils (31) schneiden;
**gekennzeichnet ist durch**:
- eine Montagefläche (3010) an einer Oberseite (301) des Kopplungsglieds (30) für eine Ankopplung an die zweite Linearführung (20) ausgestaltet ist;
- eine Montagefläche (3020) an einer Unterseite (302) des Kopplungsglieds (30) für eine Ankopplung an den ersten Laufwagen (11A) ausgestaltet ist;
- das Zentralteil (31) einen Abschnitt mit einem U-Profil aufweist, wobei eine Innenseite des U-Profils die Montagefläche (3020) an der Unterseite (302) des Kopplungsglieds (30) ausbildet; und
- nur die beiden Seitenteile (32) die Montagefläche (3010) an der Oberseite (301) des Kopplungsglieds (30) ausbilden, nicht aber das Zentralteil (31).

2. Kopplungsglied (30) nach Anspruch 1, wobei jede der Verbindungsblattfedern (33) in einer Ebene parallel zu einer dritten Linearrichtung (Z) angeordnet ist, wobei die dritte Linearrichtung (Z) senkrecht zur sowohl der ersten Linearrichtung (X) als auch der zweiten Linearrichtung (Y) ist.

3. Kopplungsglied (30) nach Anspruch 1 oder 2, wobei die Verbindungsblattfedern (33) für eine Verschwenkung der beiden Seitenteile (32) um die Zentralachse (C) als Rotationsachse ausgestaltet sind.

4. Kopplungsglied (30) nach einem der vorstehenden Ansprüche, wobei das Zentralteil (31) senkrecht zur ersten Linearrichtung (X) liegende Stirnseiten (39) des Kopplungsglieds (30) zumindest teilweise ausbildet, und/oder wobei die beiden Seitenteile (32) das Zentralteil (31) nicht vollständig umgeben.

5. Kopplungsglied (30) nach einem der vorstehenden Ansprüche, wobei nur das Zentralteil (31), nicht aber die beiden Seitenteile (32) an der Ausbildung der Montagefläche (3020) an der Unterseite (302) des Kopplungsglieds (30) beteiligt ist.

6. Kopplungsglied (30) nach einem der vorstehenden Ansprüche, wobei die Mehrzahl von Verbindungsblattfedern (33) sechs beträgt, von denen jeweils drei die Verbindung zu jeweils einem der Seitenteile (32) ausbilden.

7. Kopplungsglied (30) nach einem der vorstehenden Ansprüche, wobei einige der Verbindungsblattfedern (33) an Endabschnitten des Kopplungsglieds (30) vorgesehen sind, und dort weiter von der Zentralachse (C) beabstandet angeordnet sind, als jede von mindestens zwei der Verbindungsblattfedern (33), die mittig, bezogen auf eine Gesamterstreckung in erster Linearrichtung (X), angeordnet sind.

8. Kopplungsglied (30) nach einem der vorstehenden Ansprüche, wobei das Kopplungsglied (30) monolithisch ausgebildet ist, beispielsweise aus einem Edelstahl.

## Claims

1. Coupling member (30) in a positioning device (100) which comprises a first linear guide (10A) for guiding a first carriage (11A) along a first linear direction (X) and comprises a second linear guide (20) for guiding a second carriage (21) along a second linear direction (Y), which is substantially perpendicular to the first linear direction (X), wherein the coupling member (30) is configured for formation of a coupling between the first carriage (11A) and the second linear guide (20), and wherein:
- a central part (31);
- two side parts (32), each of which is arranged with a spacing to the central part (31) in the second linear direction (Y) and flanks the central part (31); and
- a plurality of connecting leaf springs (33), which form a connection between the central part (31) and the two side parts (32), wherein the planes in which the connecting leaf springs (33) are arranged intersect at a central axis (C) of the central part (31);
is **characterized by**:
- a mounting surface (3010) on a top side (301) of the coupling member (30) is configured for coupling to the second linear guide (20);
- a mounting surface (3020) on a bottom side (302) of the coupling member (30) is configured for coupling to the first carriage (11A);
- the central part (31) has a portion with a U profile, wherein the mounting surface (3020) on the bottom side (302) of the coupling member (30) is formed by an inner side of the U profile; and
- the mounting surface (3010) on the top side (301) of the coupling member (30) is formed only by the two side parts (32), but not by the central part (31) .

2. Coupling member (30) according to Claim 1, wherein each of the connecting leaf springs (33) is arranged in a plane which is parallel to a third linear direction (Z), wherein the third linear direction (Z) is perpendicular to both the first linear direction (X) and the second linear direction (Y).

3. Coupling member (30) according to Claim 1 or 2, wherein the connecting leaf springs (33) are configured for pivoting of the two side parts (32) about the central axis (C), as axis of rotation.

4. Coupling member (30) according to one of the preceding claims, wherein the central part (31) at least partially forms end faces (39) of the coupling member (30) that are situated perpendicularly to the first linear direction (X), and/or wherein the two side parts (32) do not completely surround the central part (31).

5. Coupling member (30) according to one of the preceding claims, wherein the formation of the mounting surface (3020) on the bottom side (302) of the coupling member (30) involves only the central part (31), but not the two side parts (32).

6. Coupling member (30) according to one of the preceding claims, wherein the plurality of connecting leaf springs (33) amounts to six, of which in each case three form the connection to in each case one of the side parts (32).

7. Coupling member (30) according to one of the preceding claims, wherein some of the connecting leaf springs (33) are provided at end portions of the coupling member (30) and, there, are arranged spaced further apart from the central axis (C) than each of at least two of the connecting springs (33) which are arranged centrally in relation to a total extent in the first linear direction (X).

8. Coupling member (30) according to one of the preceding claims, wherein the coupling member (30) is formed monolithically, for example from a high-grade steel.

## Revendications

1. Élément de couplage (30) dans un dispositif de positionnement (100), qui comprend un premier guide linéaire (10A) pour guider un premier chariot (11A) le long d'une première direction linéaire (X) ainsi qu'un deuxième guide linéaire (20) pour guider un deuxième chariot (21) le long d'une deuxième direction linéaire (Y) essentiellement perpendiculaire à la première direction linéaire (X), l'élément de couplage (30) étant conçu pour réaliser un couplage entre le premier chariot (11A) et le deuxième guide linéaire (20), et dans lequel :
- une partie centrale (31) ;
- deux parties latérales (32), chacune agencées à une distance de la partie centrale (31) dans la deuxième direction linéaire (Y) et flanquant la partie centrale (31) ; et
- une pluralité de ressorts à lame de liaison (33) réalisant une liaison entre la partie centrale (31) et les deux parties latérales (32), les plans dans lesquels les ressorts à lame de liaison (33) sont agencés se coupant dans un axe central (C) de la partie centrale (31) ;
est **caractérisé par** :
- une surface de montage (3010) sur un côté supérieur (301) de l'élément de couplage (30) est conçue pour être couplée au deuxième guide linéaire (20) ;
- une surface de montage (3020) sur un côté inférieur (302) de l'élément de couplage (30) est conçue pour être couplée au premier chariot (11A) ;
- la partie centrale (31) présente une section ayant un profil en U, un côté intérieur du profil en U réalisant la surface de montage (3020) sur le côté inférieur (302) de l'élément de couplage (30) ; et
- seules les deux parties latérales (32) réalisent la surface de montage (3010) sur le côté supérieur (301) de l'élément de couplage (30), mais pas la partie centrale (31) .

2. Élément de couplage (30) selon la revendication 1, dans lequel chacun des ressorts à lame de liaison (33) est agencé dans un plan parallèle à une troisième direction linéaire (Z), la troisième direction linéaire (Z) étant perpendiculaire à la fois à la première direction linéaire (X) et à la deuxième direction linéaire (Y).

3. Élément de couplage (30) selon la revendication 1 ou 2, dans lequel les ressorts à lame de liaison (33) sont conçus pour faire pivoter les deux parties latérales (32) autour de l'axe central (C) en tant qu'axe de rotation.

4. Élément de couplage (30) selon l'une quelconque des revendications précédentes, dans lequel la partie centrale (31) réalise au moins partiellement des côtés frontaux (39) de l'élément de couplage (30) perpendiculaires à la première direction linéaire (X), et/ou dans lequel les deux parties latérales (32) n'entourent pas entièrement la partie centrale (31).

5. Élément de couplage (30) selon l'une quelconque des revendications précédentes, dans lequel seule la partie centrale (31), et non les deux parties latérales (32), participe à la réalisation de la surface de montage (3020) sur le côté inférieur (302) de l'élément de couplage (30).

6. Élément de couplage (30) selon l'une quelconque des revendications précédentes, dans lequel la pluralité de ressorts à lame de liaison (33) est de six, dont trois réalisent la liaison avec respectivement l'une des parties latérales (32).

7. Élément de couplage (30) selon l'une quelconque des revendications précédentes, dans lequel certains des ressorts à lame de liaison (33) sont prévus sur des sections d'extrémité de l'élément de couplage (30) et y sont agencés à une distance plus grande de l'axe central (C) que chacun d'au moins deux des ressorts à lame de liaison (33) qui sont agencés au centre par rapport à une extension totale dans la première direction linéaire (X).

8. Élément de couplage (30) selon l'une quelconque des revendications précédentes, dans lequel l'élément de couplage (30) est réalisé sous forme monolithique, par exemple en un acier inoxydable.
